# EUROPÄISCHE PATENTSCHRIFT

(11) **EP 0 981 848 B1**
(45) Veröffentlichungstag und Bekanntmachung des Hinweises auf die Patenterteilung: **11.02.2009**
(21) Anmeldenummer: 99914470.2
(22) Anmeldetag: 04.03.1999
(51) Int. Cl.: H02H 9/02, H02H 3/087

(54) **SCHUTZSCHALTUNG**
PROTECTIVE CIRCUIT
CIRCUIT DE PROTECTION

(30) Priorität: 10.03.1998 FR 9802909; 13.03.1998 FR 9803140
(43) Veröffentlichungstag der Anmeldung: 01.03.2000
(73) Patentinhaber: Continental Automotive GmbH, 30165 Hannover (DE)
(72) Erfinder: BOIGUES, Norbert, F-78120 Rambouillet (FR)
(86) Internationale Anmeldenummer: PCT/EP1999/001393
(87) Internationale Veröffentlichungsnummer: WO 1999/046842

(56) Entgegenhaltungen:
- EP-A- 0 505 602
- DE-A- 1 764 713
- DE-A- 2 812 157
- DE-B- 1 292 723
- FR-A- 2 652 687
- FR-A- 2 654 874

## Beschreibung

Die vorliegende Erfindung betrifft eine Schutzschaltung zur Einfügung in eine Übertragungsleitung für Analogsignale, mit einem Versorgungsanschluß, einem Masseanschluß, einem Eingangsanschluß und einem Ausgangsanschluß, wobei die Schaltung einen ersten Reihentransistor umfaßt, dessen eine Stromaufnahmeelektrode mit einem Anschluß verbunden ist, an den eine Spannung angelegt wird, die der Spannung am Eingangsanschluß im wesentlichen gleich ist, wobei eine Stromabgabeelektrode dieses Transistors an den Ausgangsanschluß abgibt, und einen zweiten Transistor zum Steuern des ersten.

Die FR 2 652 687 A beschreibt eine Schaltung zum Schutz gegen Kurzschlüsse, bei der die zu schützende Schaltung zunächst mit einem kurzen Puls beaufschlagt wird und gleichzeitig überwacht wird, ob eine überlast oder Kurzschlußsituation vorliegt. Wenn eine solche Situation nicht detektiert wird, wird ein normaler Betrieb aufgenommen.

Eine Schutzschaltung ist aus der Schrift DE-OS-28 12 157 bekannt. Nach dieser Schrift ist ein in eine Leitung eingefügter Schalttransistor mit einem Hilfstransistor verbunden, der von einem Signal an den Anschlüssen eines Strommeßwiderstands leitend gesteuert wird, der Strom in der Basis des Schalttransistors hinzufügt.

Es ist eine Aufgabe der Erfindung, die Schaltung wirkungsvoller zu machen.

Diese Aufgabe wird durch eine Schaltung mit den Merkmalen des Anspruchs 1 gelöst.

Bestimmte Ausführungsformen der Erfindung erscheinen in den abhängigen Ansprüchen 2 bis 6.

Diese Aspekte der Erfindung und andere, ausführlichere Aspekte werden aus der folgenden Beschreibung einer Ausführungsform, die ein nicht begrenzendes Beispiel bildet, deutlicher werden.
Figur 1 stellt ein Straßenfahrzeug dar.
Figur 2 ist ein Schaltbild einer Ausführungsform der Schaltung, die zur Anordnung zwischen einem Analogsignalgenerator und einer Übertragungsleitung für dieses Signal vorgesehen ist.
Figur 3 ist ein Schaltbild einer Ausführungsform der Schaltung, die zur Anordnung zwischen einer Übertragungsleitung eines Signals und einer Vorrichtung vorgesehen ist.
Figur 4 ist ein Schaltbild eines Verwendungsbeispiels der Schaltung der Figur 3.

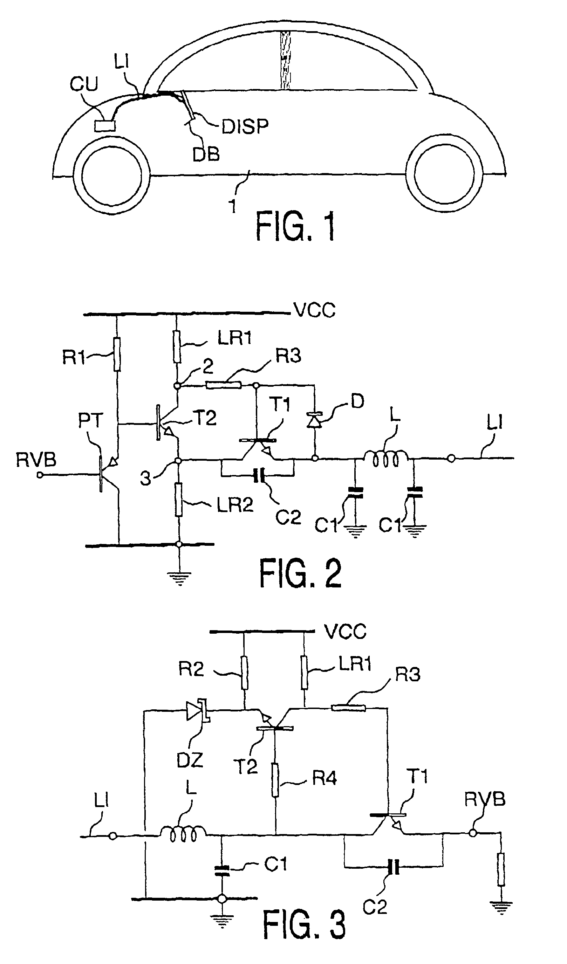

Das Fahrzeug 1 der Figur 1 ist mit einer Zentraleinheit versehen, die ein Analogsignal erzeugt, und mit einer Übertragungsleitung für dieses Signal, die zu einer peripheren Einheit führt, die in das Armaturenbrett DB des Fahrzeuges eingebaut ist. Die Zentraleinheit CU ist beispielsweise der Rechner einer Navigationsvorrichtung, die RVB-Signale von Farbkomponenten für eine Anzeige liefert, die Leitung ist beispielsweise eine bipolare abgeschirmte Leitung LI (eine pro Farbe) und die periphere Einheit ist beispielsweise eine Flüssigkristallanzeige DISP.

Die Schaltung der Figur 2 wird durch eine Spannung VCC beispielsweise von 12 Volt versorgt. Sie umfaßt einen Eingangsanschluß RVB, an den der Rechner CU ein Signal liefert, und einen Ausgangsanschluß, der mit der Leitung LI verbunden ist. Ein erster Reihentransistor T1 vom NPN-Typ ist so angeordnet, daß sein Hauptstromweg (der vom Kollektor zum Emitter läuft) den Eingangsanschluß über verschiedene Glieder, die hiernach beschrieben werden, mit dem Ausgangsanschluß verbindet.

Das Signal des Eingangsanschlusses wird an eine an und für sich bekannte Vorverstärkerstufe angelegt, die aus einem nachgeschalteten Transistor PT mit einem Lastwiderstand R1 besteht. Das von der Vorverstärkerstufe PT abgegebene Signal wird an die Steuerelektrode, nämlich die Basis, eines zweiten Transistors T2 desselben Leitungstyps wie der Reihentransistor angelegt, der gleichzeitig als herkömmlicher Verstärker mit einer Stromaufnahmeelektrode, nämlich dem Kollektor, die durch ein Kopf-Lastglied belastet wird, nämlich dem mit dem Versorgungsanschluß verbundenen Widerstand LR1, und einer Stromabgabeelektrode, nämlich dem Emitter, die durch ein Fuß-Lastglied belastet wird, nämlich dem mit der Masse verbundenen Widerstand LR2, geschaltet ist.

Der erste Transistor T1 besitzt eine Stromaufnahmeelektrode, nämlich seinen Kollektor, die an den Emitter des zweiten Transistors T2 angeschlossen ist, das heißt an der Seite des Fuß-Lastglieds LR2. Die Stromaufnahmeelektrode von T1 ist so mit dem Anschluß 3 verbunden, an den eine im wesentlichen der Spannung des Eingangsanschlusses gleiche Spannung angelegt wird. Eine Stromabgabeelektrode, nämlich sein Emitter, gibt an eine Leitung LI ab, und eine Steuerelektrode, nämlich seine Basis, ist über einen Widerstand R3 mit dem Kollektor des Transistors T2, das heißt an der Seite des Kopf-Lastglieds, verbunden. Der Hauptstrom in T1 wird von VCC aus über den Widerstand LR1 geliefert. Wenn beispielsweise die Leitung LI zur Masse kurzgeschlossen würde, würde ein Überstrom in LR1 die Spannung am Punkt 2 und damit auch die Spannung der Basis von T1 abfallen lassen und damit den der Leitung zugeführten Strom begrenzen.

Eine Diode D ist zwischen die Leitung LI und die Basis des ersten Transistors **T1** geschaltet, wobei ihre Kathode mit der Basis von T1 und daher in einer solchen Richtung, daß sie im Normalbetrieb gesperrt ist, verbunden ist. Sie würde eine Sperrwirkung haben, wenn die Leitung LI zufällig in Kontakt mit der 12-Volt-Versorgung kommen würde. Eine kleine Ausführung genügt, da nie viel Strom fließt, da sie in Reihe mit R3 liegt. Der Hauptstromweg des ersten Transistors **T1** wird durch eine Kapazität C2 zwischen seinem Kollektor und seinem Emitter nebengeschlossen, um den dynamischen Widerstand dieses Transistors kurzzuschließen. Ein aus einer Induktivität L in Reihe und zwei Kapazitäten C1 in Parallelschaltung bestehendes Tiefpaßfilter ist in den vom Eingangsanschluß zum Ausgangsanschluß laufenden Stromweg eingefügt.

In einem Ausführungsbeispiel werden folgende Werte eingesetzt: R1 - 470 Ohm, LR1 und LR2 = 33 Ohm, R3 = 4700 Ohm, C1 = 1 nF, L = 1 µH, D = 1 N4148.

Die Schaltung der Figur 3 wird durch eine Versorgung VCC beispielsweise mit 12 Volt versorgt. Sie ist mit einem Eingangsanschluß versehen, der mit der Leitung LI verbunden ist, und mit einem Ausgangsanschluß RVB, der beispielsweise ein Eingangsanschluß einer Vorrichtung ist.

Der Hauptstromweg eines ersten Reihentransistors T1 des NPN-Typs verbindet den Eingangsanschluß der Schaltung mit ihrem Ausgangsanschluß. Die Spannung am Eingangsanschluß (LI) wird über einen Widerstand R4 an die Steuerelektrode, nämlich die Basis, eines zweiten Transistors T2 des NPN-Typs angelegt, der als Vergleicher zwischen eine Bezugsspannung, die an den Anschlüssen einer Fuß-Last erzeugt und an seinen Emitter angelegt wird, und die Spannung seiner Basis geschaltet ist. Die Fuß-Last ist eine Zener-Diode DZ, beispielsweise ein 5-Volt-Typ, die mit der Masse verbunden ist und in der ein Widerstand R2 einen von der Versorgung VCC kommenden Strom durchläßt. Der Kollektor des Transistors T2 ist mit der Versorgung VCC durch eine Kopf-Last LR1 verbunden. Die Basis des Reihentransistors T1 ist mit dem Kollektor von T2 über einen Widerstand R3 verbunden; sie kann auch direkt mit ihm verbunden sein.

Der Eingang der Schaltung umfaßt ein Tiefpaßfilter, das aus einer Induktivität L in Reihe und einer Kapazität C1 in Parallelschaltung besteht. Dieses Filter bietet Schutz gegen elektromagnetische Störungen. Der Hauptstromweg des Transistors T1 ist durch eine Kapazität C2 nebengeschlossen, um den dynamischen Widerstand dieses Transistors kurzzuschließen. Die Werte der Glieder können aus denen der entsprechenden Glieder der Schaltung der Figur 2 bestimmt werden.

Wenn die Leitung LI zufällig mit der Masse kurzgeschlossen wird, wird der Transistor T2 gesperrt und es fließt nur ein Strom in der Leitung über den Basis-Kollektor-Übergang des Transistors T1, der als Gleichstrom polarisiert ist; dieser Strom ist durch den Widerstand R1 und möglicherweise durch R3 begrenzt.

Wenn die Leitung LI zufällig mit der Versorgung VCC kurzgeschlossen wird, sättigt dies den Transistor T2, wodurch seine Kollektorspannung sehr nahe an der Zener-Spannung von 5 Volt gehalten wird und so die Spannung an der Last LR2 auf etwa 5 Volt begrenzt wird.

Die Zener-Diode DZ könnte zur Vereinfachung durch einen einfachen Widerstand ersetzt werden; die Bezugsspannung würde nicht so gut definiert sein, aber die Schaltung bliebe wirkungsvoll.

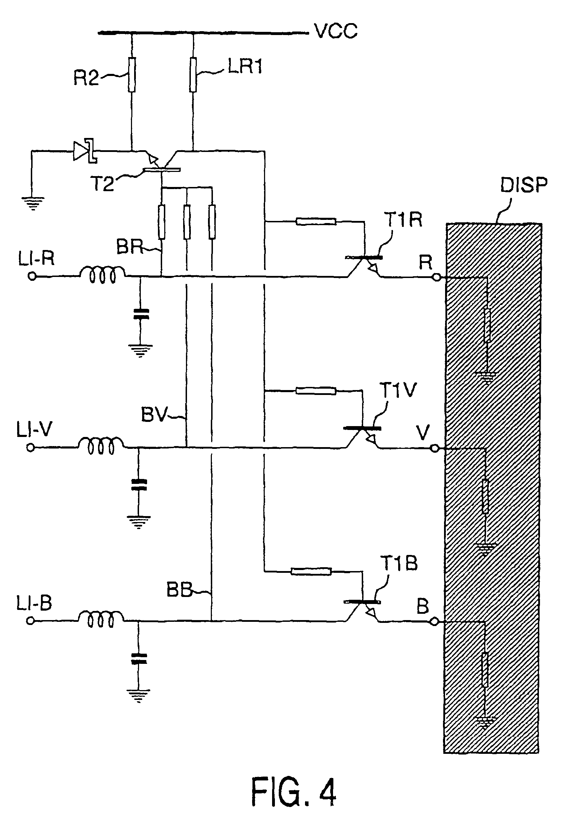

Die Schutzschaltung der Figur 4 ist zwischen mehreren Signalübertragungsleitungen, nämlich den drei Leitungen LI-R, LI-V, LI-B, und mehreren Eingängen, beispielsweise drei Farbsignaleingängen R, V, B, der Flüssigkristallanzeige DISP plaziert. Die Schaltung umfaßt mehrere erste Transistoren T1R, T1V, T1B, deren Steuerelektroden (die Basen) jeweils mit einem Ausgangswiderstand des zweiten Transistors T2, das heißt seinem Kollektor, verbunden sind. Die Steuerelektrode (die Basis) des zweiten Transistors T2 ist mit den Leitungen über drei sterngeschaltete Zweige BR, BV, BB, jeweils mit einem Widerstand, verbunden.

Die bipolaren Transistoren können möglicherweise durch Feldeffekttransistoren ersetzt werden. In diesem Fall wird die Steuerelektrode Gate, die Stromaufnahmeelektrode Drain und die Stromabgabeelektrode Source genannt.

## Patentansprüche

1. Schutzschaltung zur Einfügung in eine Übertragungsleitung für Analogsignale mit einem Versorgungsanschluß, einem Masseanschluß, einem Eingangsanschluß und einem Ausgangsanschluß, wobei die Schaltung einen ersten Reihentransistor umfaßt, dessen eine Stromaufnahmeelektrode mit einem Anschluß verbunden ist, an den eine Spannung angelegt wird, die der Spannung am Eingangsanschluß im wesentlichen gleich ist, wobei eine Stromabgabeelektrode dieses Transistors an den Ausgangsanschluß abgibt, und einen zweiten Transistor zum Steuern des ersten, **dadurch gekennzeichnet, daß** der zweite Transistor als Verstärker geschaltet ist, mit einer Stromaufnahmeelektrode, die durch ein Lastglied am Kopf belastet wird, das mit dem Versorgungsanschluß verbunden ist, einer Stromabgabelektrode, die durch ein Lastglied am Fuß belastet wird, das mit der Masse verbunden ist, und einer Steuerelektrode, die so angeschlossen ist, daß die Eingangsansehlußspannung im wesentlichen an sie angelegt wird, wobei eine Steuerelektrode des Reihentransistors mit dem zweiten Transistor an der Seite des Kopf-Lastgliedes verbunden ist.

2. Schutzschaltung nach Anspruch 1, zur Anordnung zwischen einem Analogsignalgenerator und einer Übertragungsleitung für dieses Signal, **dadurch gekennzeichnet, daß** die Elektrode des zweiten Transistors, die durch die Fuß-Last belastet ist, mit dem Ausgangsanschluß über den Reihentransistor verbunden ist.

3. Schutzschaltung nach Anspruch 2, **dadurch gekennzeichnet, daß** eine Diode zwischen die Leitung und die Steuerelektrode des Reihentransistors in einer solchen Richtung geschaltet ist, daß sie im Normalbetrieb gesperrt ist.

4. Schutzschaltung nach Anspruch 1, zur Anordnung zwischen einer Übertragungsleitung eines Analogsignals und einer Vorrichtung, **dadurch gekennzeichnet, daß** das Fuß-Lastglied eine Zener-Diode oder eine Widerstandsbrücke zwischen dem Versorgungsanschluß und der Masse ist.

5. Schutzschaltung nach Anspruch 4, zur Anordnung zwischen mehreren Übertragungsleitungen und der Vorrichtung, **dadurch gekennzeichnet, daß** sie mehrere Eingangsanschlüsse umfaßt, die Steuerelektrode des ersten Transistors mit den Eingangsanschlüssen über mehrere sterngeschaltete Zweige verbunden ist und die Schaltung mehrere zweite Transistoren umfaßt, die jeweils mit einem Ausgangsanschluß verbunden sind, wobei die Steuerelektroden dieser Glieder jeweils durch einen Widerstand mit dem Ausgang des ersten Transistors verbunden sind.

6. Schutzschaltung nach Anspruch 1, **dadurch gekennzeichnet, daß** der Hauptstromweg des Reihentransistors durch eine Kapazität nebengeschlossen ist.

## Claims

1. Protective circuit for insertion into a transmission line for analogue signals having a supply terminal, an earth terminal, an input terminal and an output terminal, wherein the circuit comprises a first series transistor, one of whose current-receiving electrodes is connected to a terminal to which a voltage which is essentially the same as the voltage at the input terminal is applied, wherein a current-outputting electrode of this transistor outputs to the output terminal, and a second transistor for controlling the first, **characterized in that** the second transistor is switched as an amplifier, having a current-receiving electrode which is loaded at the head by a load element which is connected to the supply terminal, a current-outputting electrode which is loaded at the foot by a load element which is connected to earth, and a control electrode which is connected in such a way that the input terminal voltage is applied essentially to it, wherein a control electrode of the series transistor is connected to the second transistor on the head load element side.

2. Protective circuit according to Claim 1, for arrangement between an analogue signal generator and a transmission line for this signal, **characterized in that** the electrode of the second transistor which is loaded by the foot load is connected to the output terminal via the series transistor.

3. Protective circuit according to Claim 2, **characterized in that** a diode is connected between the line and the control electrode of the series transistor in such a direction that it is switched off during normal operation.

4. Protective circuit according to Claim 1, for arrangement between a transmission line of an analogue signal and a device, **characterized in that** the foot load element is a zener diode or a resistance bridge between the supply terminal and earth.

5. Protective circuit according to Claim 4, for arrangement between a plurality of transmission lines and the device, **characterized in that** it comprises a plurality of input terminals, the control electrode of the first transistor is connected to the input terminals via a plurality of starswitched branches, and the circuit comprises a plurality of second transistors which are each connected to an output terminal, wherein the control electrodes of these elements are each connected to the output of the first transistor by means of a resistor.

6. Protective circuit according to Claim 1, **characterized in that** the main current path of the series transistor is shunted by a capacitor.

## Revendications

1. Circuit de protection destiné à être inséré dans une ligne de transmission pour signaux analogiques, comportant un raccordement d'alimentation, un raccordement de mise à la masse, un raccordement d'entrée et un raccordement de sortie, où le circuit comprend un premier transistor en série, dont une électrode de consommation de courant est reliée à un raccordement sur lequel est appliquée une tension, laquelle est, pour l'essentiel, égale à la tension au raccordement d'entrée, où une électrode de ce transistor, laquelle délivre du courant, délivre du courant au raccordement de sortie et où le circuit comprend un deuxième transistor destiné à contrôler le premier, **caractérisé par le fait que** le deuxième transistor est monté comme amplificateur et comporte une électrode de consommation de courant, qui est soumise à sa tête à la charge d'un élément de charge relié au raccordement d'alimentation, une électrode délivrant du courant, qui est soumise à son pied à la charge d'un élément de charge relié à la masse et une électrode de commande qui est raccordée de manière telle que la tension de raccordement d'entrée lui est, pour l'essentiel, appliquée, une électrode de commande du transistor en série étant reliée au deuxième transistor sur le côté de l'élément de charge de tête.

2. Circuit de protection selon la revendication 1, destiné à être placé entre un générateur de signal analogique et une ligne de transmission pour ce signal, **caractérisé par le fait que** l'électrode du deuxième transistor, qui est soumise à la charge de l'élément de charge de pied, est reliée, à travers le transistor en série, au raccordement de sortie.

3. Circuit de protection selon la revendication 2, **caractérisé par le fait qu'**une diode est insérée entre la ligne et l'électrode de commande du transistor en série dans un sens tel que la diode est, en fonctionnement normal, fermée.

4. Circuit de protection selon la revendication 1, destiné à être placé entre une ligne de transmission pour un signal analogique et un dispositif, **caractérisé par le fait que** l'élément de charge de pied est une diode de Zener ou un pont de résistances entre le raccordement d'alimentation et la masse.

5. Circuit de protection selon la revendication 4, destiné à être placé entre plusieurs lignes de transmission et le dispositif, **caractérisé par le fait qu'**il comprend plusieurs raccordements d'entrée, que l'électrode de commande du premier transistor est raccordée, à travers plusieurs branches montées en étoile, aux raccordements d'entrée et que le circuit comprend plusieurs deuxièmes transistors, qui sont chacun raccordés à un raccordement de sortie, les électrodes de commande de ces éléments étant chacune reliée à travers une résistance à la sortie du premier transistor.

6. Circuit de protection selon la revendication 1, **caractérisé par le fait qu'**une capacité est montée en dérivation sur le circuit principal du courant du transistor en série.
